# FASCICULE DE BREVET EUROPEEN

(11) **EP 1 251 622 B1**
(45) Date de publication et mention de la délivrance du brevet: **31.10.2012**
(21) Numéro de dépôt: 02290951.9
(22) Date de dépôt: 16.04.2002
(51) Int. Cl.: H02K 3/18, H02K 15/00, H02K 3/52

(54) **Bobine pour machine électrique tournante**
Spule für drehende elektrische Maschine
Coil for rotating electrical machine

(30) Priorité: 17.04.2001 FR 0105188
(43) Date de publication de la demande: 23.10.2002
(73) Titulaire: MOTEURS LEROY-SOMER, 16000 Angoulême (FR)
(72) Inventeur: Eydelie, André, 16710 Saint-Yrieix (FR); Gilles, Christophe, 16000 Angoulême (FR); Jadeau, Laurent, 16110 La Rochefoucauld (FR); Augier, Philippe, 16430 Champniers (FR); Guillot, Jean-Marie, 16320 Blanzaguet, Saint Cybard (FR)
(74) Mandataire: Tanty, François

(56) Documents cités:
- EP-A- 0 891 030
- DE-C- 700 420
- US-A- 4 617 725
- PATENT ABSTRACTS OF JAPAN vol. 2000, no. 10, 17 novembre 2000 (2000-11-17) -& JP 2000 197294 A (TOYOTA MOTOR CORP), 14 juillet 2000 (2000-07-14)
- PATENT ABSTRACTS OF JAPAN vol. 2000, no. 06, 22 septembre 2000 (2000-09-22) -& JP 2000 069705 A (TOYOTA MOTOR CORP), 3 mars 2000 (2000-03-03)

## Description

La présente invention concerne les machines tournantes électriques et plus particulièrement, mais non exclusivement, les moteurs synchrones.

L'invention a pour objet une nouvelle bobine utilisée pour la construction d'une machine tournante électrique, destinée à être engagée sur une dent d'un circuit magnétique de stator.

Le brevet DE 700 420 porte sur une telle bobine.

On connaît notamment par le brevet US 4 617 725 une machine dynamoélectrique comportant des bobinages formés par un ensemble de conducteurs parallèles enroulés simultanément autour du corps magnétique d'un pôle.

La nouvelle bobine selon l'invention est définie dans la revendication 1.

Grâce à l'invention, le flux magnétique vu par chacune des spires, dû aux lignes de champ magnétique le long de la dent, est sensiblement le même et l'on réduit de cette manière l'apparition de courants de circulation parasites dans la bobine, donc les pertes par effet Joule, notamment aux vitesses de rotation élevées du rotor.

De plus, l'invention permet de réaliser un stator particulièrement compact, car ayant des bobines dont les têtes sont courtes. En outre, les spires de la bobine peuvent être bien jointives, ce qui permet un bon remplissage des encoches du stator.

Les fils utilisés sont avantageusement de section circulaire, afin de faciliter l'opération d'enroulement, et de diamètre compris entre 0,3 et 2,5 mm.

Le nombre de spires est par exemple supérieur ou égal à 10, et le nombre de fils du faisceau est compris entre 3 et 20, par exemple. La section intérieure de la bobine est par exemple supérieure ou égale à quelques cm², par exemple une dizaine de cm².

Dans une réalisation particulière, la section intérieure de la bobine est sensiblement rectangulaire.

La section intérieure de la bobine est plus large d'un côté que de l'autre, de façon à permettre son montage sur une dent présentant un profil complémentaire, avec un certain effet de serrage. Cet effet de serrage est particulièrement utile pour contribuer à immobiliser une bobine de remplacement préimprégnée, montée sur le stator, sans qu'il soit nécessaire de procéder à une nouvelle imprégnation de ce dernier par une résine isolante. Ainsi, la bobine peut présenter une section intérieure ayant des faces opposées non parallèles faisant un angle, le stator comportant des dents ayant des faces opposées non parallèles faisant le même angle.

Les fils du faisceau, dénudés à leurs extrémités, sont avantageusement recourbés pour former des crochets permettant une connexion aisée à des câbles d'amenée du courant. Dans une réalisation particulière, ces crochets sont dirigés vers un plan médian de la bobine, perpendiculaire à l'axe d'enroulement.

L'invention a encore pour objet un chapelet de bobines comportant au moins deux bobines reliées électriquement chacune par une extrémité à un câble conducteur électrique gainé, localement dénudé au niveau de la connexion avec chaque bobine.

L'invention a encore pour objet un stator de machine électrique tournante comportant plusieurs bobines telles que définies ci-dessus, engagées sur les dents du circuit magnétique du stator.

Dans une réalisation particulière, les bobines présentent une section intérieure dont la dimension du grand coté est supérieure à la dimension des dents, mesurée le long de l'axe du stator, afin de ménager un espace suffisant pour permettre le passage d'un détecteur permettant de délivrer un signal représentatif de la rotation du rotor, ce détecteur comportant par exemple un capteur à effet Hall.

L'invention a encore pour objet un moteur synchrone comportant un stator ayant des bobines telles que définies ci-dessus.

L'invention trouve une application avantageuse dans les machines comportant un stator bobiné sur dents et un rotor à aimants permanents à concentration de flux. Dans un stator bobiné sur dents, chaque dent sert de noyau à un enroulement. De plus, le nombre de dents n_{dents} est fonction du nombre de paires de pôles nₚₐᵢᵣₑₛ et du nombre de phases nₚₕₐₛₑₛ de préférence suivant la formule n_{dents} = nₚₐᵢᵣₑₛ *nₚₕₐₛₑₛ. La combinaison d'un rotor à concentration de flux et d'un stator bobiné sur dents permet d'avoir une machine relativement puissante sous un faible encombrement, ce qui autorise notamment le montage du moteur en porte-à-faux à l'extrémité d'un arbre, entraînant une diminution du nombre de roulements. De plus, le nombre de dents et de bobines peut être relativement faible, ce qui facilite la fabrication et diminue le prix de revient.

L'invention a encore pour objet un procédé pour réparer un stator de machine électrique tournante, comportant des bobines telles que définies ci-dessus, caractérisé par le fait qu'il comporte les étapes suivantes :
- retirer la bobine défectueuse,
- la remplacer par une bobine préimprégnée,
- immobiliser cette bobine sur la dent correspondante par effet de coin, grâce à une largeur non constante de la dent.

Les caractéristiques et avantages de la présente invention ressortiront à la lecture de la description détaillée qui va suivre, d'exemples de réalisation non limitatifs de l'invention, et à l'examen du dessin annexé, ce dernier faisant partie intégrante de la description, sur lequel :
- la figure 1 est une vue schématique en perspective d'un moteur synchrone conforme à un exemple de mise en oeuvre de l'invention,
- la figure 2 est une vue schématique de dessus selon la flèche II de la figure 1,
- la figure 3 représente isolément, en perspective et d'une manière schématique, le stator,
- la figure 4 représente isolément, en perspective, un secteur du circuit magnétique du stator,
- la figure 5 illustre l'assemblage du secteur de la figure 4 avec un secteur identique,
- la figure 6 représente isolément, en perspective, une bobine individuelle,
- la figure 7 est une section selon VII-VII de la figure 6,
- la figure 8 représente de manière schématique un chapelet de bobines utilisé pour la fabrication du stator,
- la figure 9 illustre de manière schématique la mise en place des chapelets de bobines sur le stator, au cours de la fabrication du stator,
- la figure 10 est une vue analogue à la figure 9, très schématique et simplifiée, tous les chapelets ayant été mis en place, pour illustrer le trajet circulaire des câbles d'amenée du courant, et
- la figure 11 est un schéma donnant un exemple de connexion électrique des bobines entre elles.

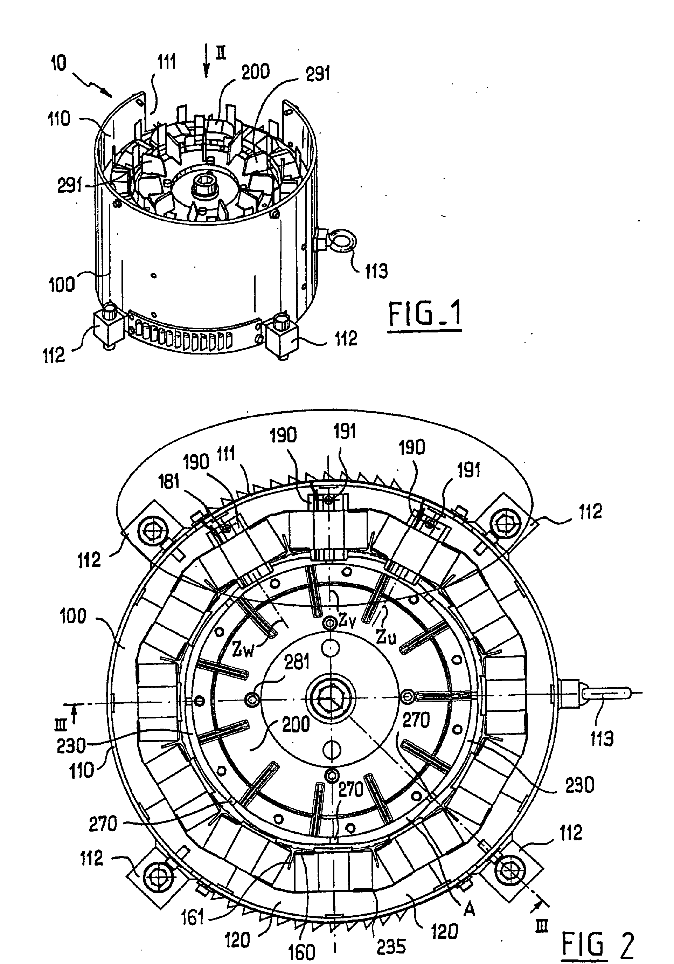

On a représenté aux figures 1 et 2 un moteur synchrone 10 conforme à l'invention, comportant un stator 100 et un rotor 200. Le moteur 10 est sans balais, à rotor à concentration de flux et à stator bobiné sur dents, et fonctionne en courant triphasé.

Le stator 100 comporte un carter 110 en acier, présentant une ouïe latérale 111 pour le passage notamment des conducteurs électriques d'alimentation des enroulements du stator. Le carter est muni, extérieurement, de pattes de fixation 112 et d'un crochet de levage 113.

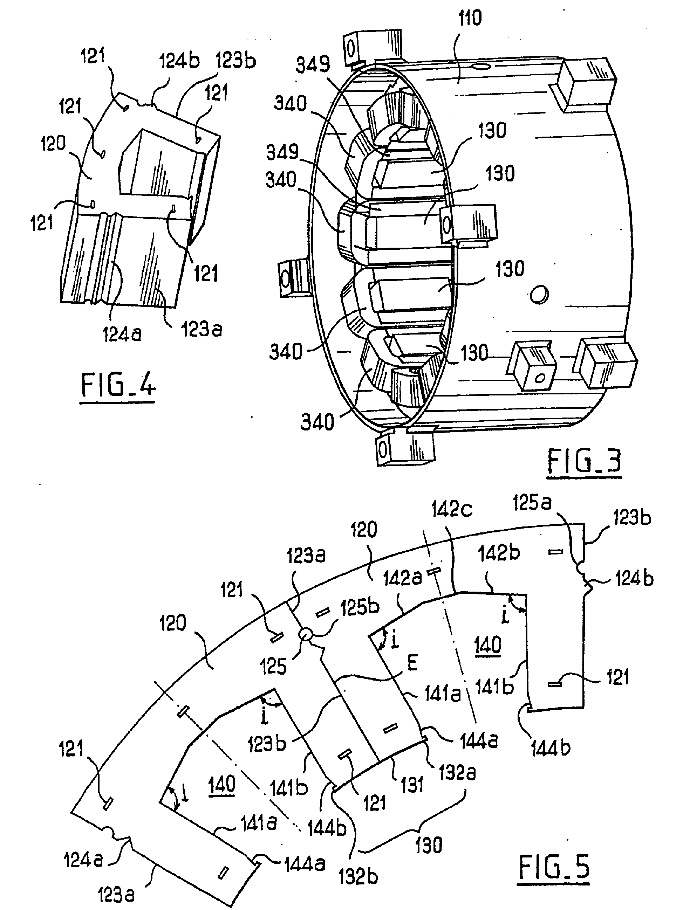

Le stator 100 comporte un circuit magnétique comprenant, dans l'exemple représenté, une pluralité de secteurs 120 identiques, dont l'un d'eux est représenté isolément en perpective à la figure 4.

Chaque secteur 120 est constitué par un paquet de tôles magnétiques identiques superposées et clipsées entre elles de manière à constituer un ensemble unitaire, le clipsage étant obtenu selon une technique connue en elle-même grâce à des déformations ponctuelles de chaque tôle en plusieurs points d'accrochage 121. L'utilisation d'un paquet de tôles magnétiques permet de limiter les pertes par courants induits. En variante, le circuit magnétique du stator pourrait être formé par la superposition de tôles chacune de forme générale annulaire, dans lesquelles seraient découpées toutes les dents 130 du stator. En variante encore, les secteurs pourraient comporter plusieurs dents chacun. Deux secteurs 120 forment, lorsque assemblés, une dent 130 servant au montage d'une bobine individuelle 340, comme on peut le voir sur la figure 3 notamment. Le nombre de dents n_{dents} est dans l'exemple décrit égal à 12, le moteur étant destiné à être alimenté en courant triphasé et le rotor comportant 8 pôles. Bien entendu, le nombre de pôles du rotor pourrait être différent et notamment être égal à 12 ou 16 par exemple. Le stator pourrait encore, bien que cela présente certains inconvénients comme expliqué plus haut, avoir un nombre de dents au stator qui ne soit pas lié au nombre de paires de pôles nₚₐᵢᵣₑₛ du rotor et au nombre de phases nₚₕₐₛₑₛ par la relation n_{dents} = nₚₐᵢᵣₑₛ * nₚₕₐₛₑₛ.

Chaque secteur 120 comporte sur ses côtés 123a et 123b destinés à coopérer avec les secteurs 120 adjacents des reliefs respectifs 124a et 124b. Ces reliefs 124a et 124b présentent des formes complémentaires, avec un profil généralement triangulaire en vue de dessus, l'un en creux l'autre en saillie, avec deux côtés sensiblement rectilignes reliés par un arrondi. La coopération des reliefs 124a et 124b contribue au bon positionnement des secteurs 120 entre eux lors de l'assemblage du circuit magnétique du stator. Chaque secteur 120 comporte également, sur ses côtés 123a et 123b, des gorges 125a et 125b respectives, chacune de section transversale demi-circulaire, situées dans le voisinage des reliefs 124a et 124b, et formant des trous 125 de section circulaire lorsque les secteurs 120 sont assemblés. Ces trous 125 servent au montage de trois détecteurs 190, comme cela sera précisé dans la suite.

On remarquera sur la figure 5 que l'entrefer E, à l'interface entre deux secteurs 120 adjacents, passe par le milieu de la dent 130 correspondante, ce qui permet de réduire les pertes magnétiques puisque le flux magnétique peut circuler sans rencontrer d'entrefer d'une demi-dent à la demi-dent adjacente d'un même secteur 120, lors du fonctionnement de la machine.

L'ensemble des secteurs 120 est inséré à force dans le carter cylindrique 110 et la cohésion du circuit magnétique formé par l'ensemble des secteurs 120 est assurée par les forces de compression radiales exercées par le carter 110 sur les secteurs 120.

Chaque secteur 120 définit une encoche 140 dont les côtés opposés 141a et 141b font chacun un angle i de plus de 90° avec les régions adjacentes 142a et 142b du fond de l'encoche 140, elles-mêmes perpendiculaires aux rayons passant par la ligne de raccordement de la dent concernée avec le fond de l'encoche. Dans l'exemple de réalisation décrit, l'angle i vaut 90,4°, cette valeur n'étant bien entendu qu'un exemple.

Les côtés 123a et 123b des secteurs sont généralement alignés chacun avec un rayon, hormis les reliefs 124a, 124b, 125a et 125b, et la largeur de chaque dent 130 croît légèrement, hormis des découpes 144a ou 144b réalisées à proximité de son extrémité libre 131 tournée vers le rotor, au fur et à mesure que l'on s'éloigne du rotor.

On remarquera à l'examen de la figure 5 que chaque dent 130 ne comporte pas, dans le voisinage de son extrémité libre 131, d'épanouissements polaires, contrairement à un grand nombre de stators connus qui ne sont pas du type bobiné sur dents. L'extrémité libre 131 est une portion de cylindre de révolution, de même axe que l'axe de rotation du rotor, et concave vers le rotor.

Dans l'exemple représenté, les parties d'extrémité 132a et 132b de chaque dent 130, situées entre son extrémité libre 131 et les découpes 144a ou 144b, sont alignées avec les côtés 14 la et 141b, respectivement.

Le fond de chaque encoche comporte une région médiane 142c reliant les régions 142a et 142b et perpendiculaire à un rayon coupant l'encoche 140 à mi-largeur, représenté en trait discontinu sur la figure 5.

Comme mentionné précédemment, chaque dent 130 reçoit une bobine individuelle 340, occupant dans chaque encoche 140 adjacente à la dent 130 considérée, sensiblement la moitié du volume de cette encoche.

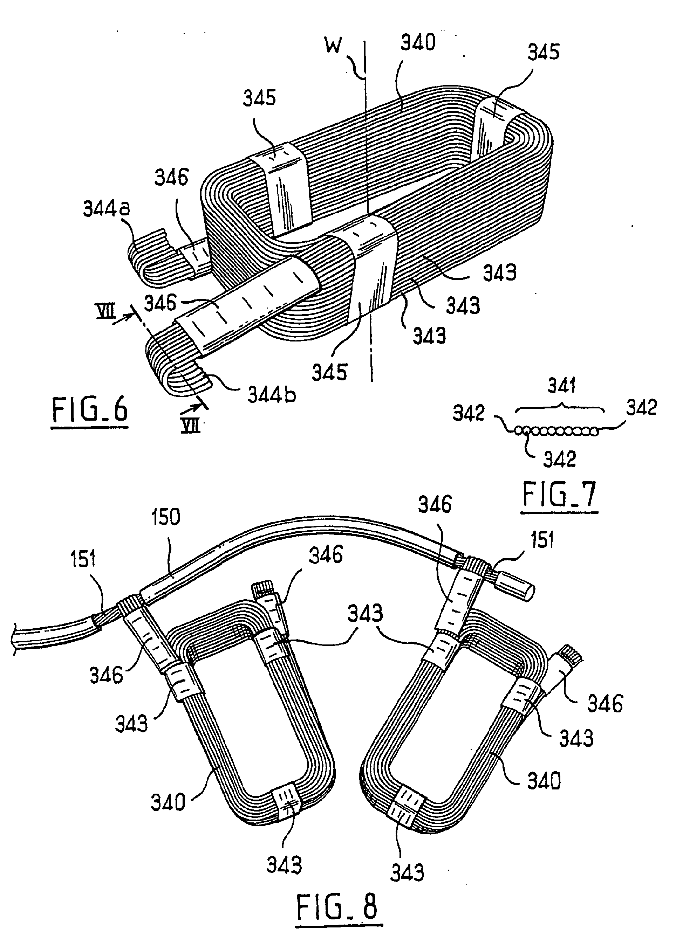

On a représenté isolément à la figure 6 une bobine individuelle 340. Celle-ci est formée par l'enroulement autour d'un axe géométrique d'enroulement W d'un faisceau 341 de fils électriques émaillés 342, ce faisceau étant sensiblement plat en section transversale, comme on peut le voir sur la figure 7.

Lorsque le faisceau 341 est observé en section transversale au niveau des spires, sa plus grande dimension est orientée sensiblement perpendiculairement à l'axe d'enroulement W.

Dans l'exemple considéré, le faisceau 341 comporte dix conducteurs individuels 342, chacun de section circulaire. Le faisceau 341 forme une vingtaine de spires 343 superposées. Les conducteurs 342 sont isolés électriquement les uns des autres au niveau des spires grâce à l'utilisation de fil émaillé. Les conducteurs 342 sont dénudés à leurs extrémités pour former des extrémités de connexion électrique 344a et 344b, recourbées chacune en forme de crochet vers un plan médian de la bobine, perpendiculaire à l'axe d'enroulement W. Ces crochets, à la fin du processus de fabrication de la bobine, sont ouverts vers le corps de celle-ci.

On voit sur la figure 6 que tous les conducteurs 342 de l'extrémité 344a sont recourbés vers le haut puis vers le corps de la bobine tandis que les fils de l'extrémité 344b sont recourbés vers le bas puis vers le corps de la bobine. Les extrémités 344a et 344b ne font sensiblement pas saillie hors du plan des deux faces d'extrémité de la bobine. Les spires qui constituent le corps de la bobine peuvent être maintenues à l'état superposé, avant imprégnation par une résine, par des bandes de toile adhésive 345. Des manchons de gaine isolante 346 sont engagés sur les parties du faisceau 341 s'étendant entre les extrémités 344a et 344b et le corps de la bobine.

La section intérieure de la bobine 340 présente une forme générale rectangulaire, comme on peut le voir sur la figure 8. Les bobines 340 sont bobinées sur des formes comportant deux grandes faces opposées, planes, faisant entre elles le même angle que les côtés 141a et 141b d'une dent, de sorte que la largeur de la section intérieure de chaque bobine varie sensiblement d'une face d'extrémité à la face opposée. On peut s'en apercevoir en essayant de monter une bobine à l'envers sur une dent 130 du stator 100.

On peut voir sur la figure 8 que les bobines 340 sont reliées électriquement par une extrémité de connexion électrique 344a ou 344b à des conducteurs électriques gainés 150, partiellement dénudés, avant d'être montées sur les dents 130 du stator 100. Les crochets formés par les extrémités 344a et 344b sont agencés de manière à épouser sensiblement le diamètre extérieur des conducteurs électriques 150 dans les parties dénudées 151. Ces parties dénudées peuvent être formées non seulement aux extrémités des conducteurs électriques 150 mais encore entre ces dernières, par enlèvement sur une longueur limitée de la gaine isolante en matière plastique.

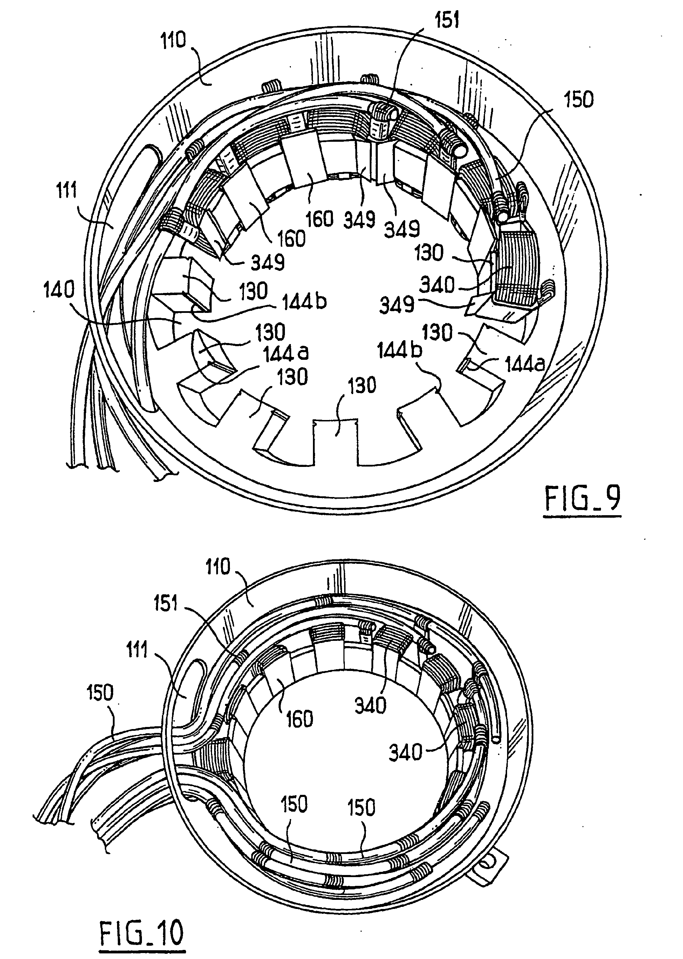

Dans l'exemple décrit, on forme des chapelets de deux bobines 340 qui sont ensuite montés sur les dents 130 correspondantes, comme illustré à la figure 9. Des feuilles 349 d'isolant sont interposées entre les dents et le fond des encoches et les bobines. On peut voir les extrémités de ces feuilles 349 sur la figure 5.

Au fur et à mesure du montage des bobines 340 sur les dents 130, des cales de maintien 160 sont glissées dans les découpes 144a, 144b pour fermer les encoches 140. Ces cales 160 comportent des cloisons s'étendant entre les parties des deux bobines 340 logées dans l'encoche 140 concernée.

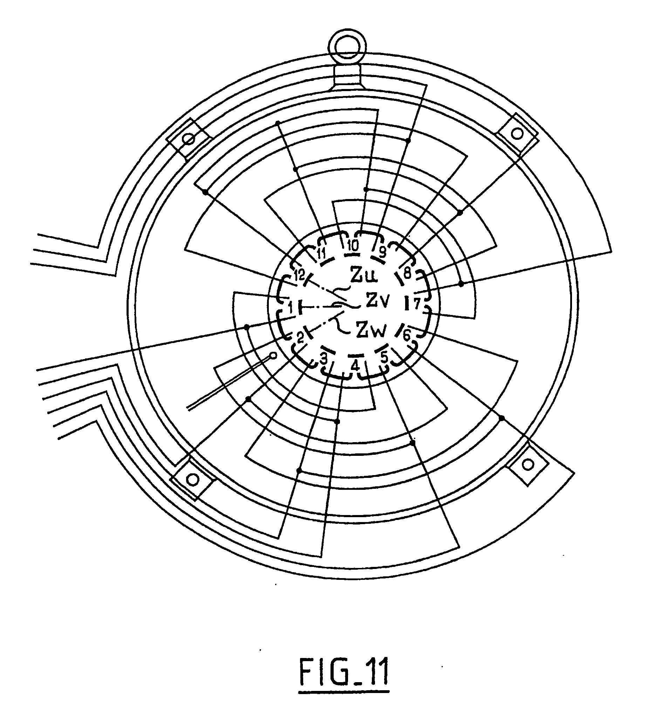

Une fois toutes les bobines 340 mises en place, les câbles 150 s'étendent suivant des trajets sensiblement circulaires d'un côté du circuit magnétique du stator, en retrait des extrémités libres 131 des dents, comme représenté à la figure 10, ces câbles étant attachés entre eux par des colliers, et l'on procède à l'imprégnation du stator avec une résine isolante, de manière conventionnelle. On a donné à la figure 11 le schéma de connexion électrique des douze bobines 340.

On comprend que l'utilisation de bobines individuelles 340 installées de la manière qui vient d'être décrite est particulièrement avantageuse car elle facilite grandement le remplacement des bobines 340. En effet, pour remplacer une bobine 340 il suffit, rotor 200 enlevé, de dessouder les extrémités 344a et 344b d'une bobine des portions dénudées 151 correspondantes, d'enlever les cales 160 concernées et d'extraire la bobine 340. Une bobine 340 de remplacement, imprégnée de résine, peut être ensuite mise en place en étant engagée sur la dent 130 précédemment libérée, puis ses extrémités 344a et 344b soudées sur les portions dénudées 151. La réparation peut se faire sur place, sans avoir à renvoyer la machine chez le fabricant et sans avoir à procéder à une nouvelle imprégnation du stator, ce qui permet de raccourcir le temps de réparation. La convergence des côtés 141a et 141b de la dent 130 vers le rotor et la forme correspondante de la section intérieure de la bobine contribuent à son immobilisation sur la dent 130. Le moteur 10 peut avantageusement être livré avec une ou plusieurs bobines 340 de remplacement préimprégnées.

Le rotor 200 est à concentration de flux et comporte huit aimants 270, s'étendant radialement, disposés entre des pièces polaires 230. Ces aimants 270 sont d'aimantation transverse.

Des joues d'extrémités sont fixées sur l'arbre du rotor de part et d'autre de celui-ci, pour bloquer axialement les pièces polaires 230 et les aimants 270. Ces joues définissent un étage de la machine. Le rotor 200 peut comporter plusieurs étages séparés par des joues intermédiaires et le nombre d'aimants 270 par étage peut être compris par exemple entre 4 et 64, pouvant être égal à 8 comme dans l'exemple représenté pour un moteur 8 pôles. Lorsque plusieurs étages sont utilisés et sont séparés par des joues intermédiaires, le nombre de joues sera de préférence égal au nombre des étages plus un.

Les joues précitées peuvent être réalisées par exemple en aluminium ou en acier amagnétique. Des taraudages 500 sont réalisés sur les joues à leur périphérie, pour permettre la fixation de vis d'équilibrage.

Comme on peut le voir sur la figure 2 notamment, l'une des joues présente un bord radialement extérieur circulaire, situé en retrait du bord radialement extérieur des pièces polaires 230 et du bord radialement extérieur des aimants 270.

Une zone annulaire A est ainsi ménagée autour de la joue, permettant la lecture du champ magnétique des aimants 270 du rotor au moyen de détecteurs 190 que l'on peut voir sur la figure 2.

Les détecteurs 190 sont, dans l'exemple de réalisation décrit, au nombre de trois, le moteur étant triphasé, et comprennent chacun un capteur à effet Hall agencé pour détecter le champ magnétique au-dessus de la région périphérique A du rotor 200, autour d'une joue d'extrémité. La lecture du champ magnétique se fait selon un axe parallèle à l'axe de rotation du rotor, le capteur à effet Hall venant en recouvrement de la région périphérique A. Les détecteurs 190 sont montés, dans l'exemple illustré, sur trois dents consécutives 130 situées au voisinage de l'ouïe 111.

Chaque détecteur 190 est fixé par une vis 191 sur une dent 130 du stator, cette vis 191 étant engagée dans un trou 125. Chaque détecteur 190 s'étend suivant l'axe radial Zᵤ, Zᵥ ou Z_{w} de la dent associée et traverse la bobine 340 engagée sur cette dent. Les bobines 340 présentent à cet effet une section intérieure dont la longueur est suffisamment grande pour permettre le passage du détecteur 190. L'espace ménagé entre une bobine et la dent correspondante pour le passage du détecteur peut être de l'ordre de 5 mm, par exemple, un tel espace permettant d'isoler la bobine et la dent là où il n'y a pas d'isolant 349.

La lecture directe du champ magnétique des aimants permanents 270 est avantageuse parce qu'elle permet d'éviter d'avoir à rapporter sur le rotor des éléments spécifiques servant uniquement à la lecture de la position angulaire du rotor. La fabrication du rotor s'en trouve simplifiée et la fiabilité renforcée. De plus, le montage des détecteurs 190 dans l'espace compris entre les bobines 340 et les dents 130 s'avère particulièrement compact, tout en permettant un accès aisé aux détecteurs 190 afin de les remplacer, si nécessaire.

Chaque détecteur 190 est positionné à l'intérieur d'une bobine 340 de phase donnée, les trois détecteurs 190 étant associés à des bobines de phases différentes, disposés sur des dents d'axes radiaux Zᵤ, Zᵥ et Z_{w} comme on peut le voir sur la figure 2. Chaque détecteur 190 permet de détecter quelle polarité du rotor se situe en face de la bobine associée (et donc de la phase concernée) à un instant donné. Chaque détecteur 190 comporte un circuit électronique de mise en forme des signaux délivrés par le capteur à effet Hall, afin de réduire la sensibilité aux parasites. Selon la position du rotor, il y a six possibilités de combinaison des différents signaux délivrés par les détecteurs 190. Chaque changement de triplet constitué par les états des signaux délivrés par les détecteurs 190 correspond à une position angulaire déterminée du rotor. On peut ainsi connaître à des instants précis la position angulaire du rotor, et calculer par interpolation la position du rotor entre ces instants, connaissant sa vitesse. L'excitation des bobinages 340 peut ainsi s'effectuer de manière optimale, avec le déphasage souhaité.

Le rotor 200 comporte, sur l'une au moins des joues d'extrémité, des ailettes 291 de refroidissement, visibles sur la figure 1 notamment. On notera qu'une action de refroidissement supplémentaire est obtenue grâce à la présence de lobes 235 formés par les pièces polaires 230 à la périphérie du rotor, qui permettent de générer un courant d'air de refroidissement au coeur même du moteur et de réduire les ondulations de couple.

L'invention permet de fabriquer des machines tournantes électriques à partir d'une gamme de circuits magnétiques de stators et de rotors préfabriqués, de différents diamètres, les stators présentant des dents standards. On choisira les dimensions axiales des circuits magnétiques du rotor et du stator en fonction de la puissance à fournir, en empilant un nombre plus ou moins important de secteurs et de pièces polaires. Seules les bobines pourront être fabriquées sur mesure pour un circuit magnétique de stator réalisé à partir d'éléments préfabriqués, en déterminant le nombre de spires de la bobine, le diamètre des fils conducteurs du faisceau plat et le nombre de ces fils, en fonction des performances demandées par l'utilisateur de la machine.

L'invention n'est pas limitée à un moteur synchrone et s'applique également à la fabrication d'une génératrice. Le rotor peut être intérieur ou extérieur.

La puissance électrique de la machine peut être comprise par exemple entre 1 et 750 kW. La vitesse de rotation du rotor peut être comprise par exemple entre 1000 et 10000 trs/mn. Une machine conforme à l'invention peut trouver également des applications lorsque la vitesse est inférieure à 1000 trs/mn. Le diamètre extérieur de la machine peut être compris par exemple entre 50 mm et 1 m ; dans les applications les plus courantes, le diamètre extérieur pourra être compris entre 100 et 600 mm.

L'invention n'est pas limitée à un nombre de pôles particuliers ni à l'alimentation du stator avec du courant triphasé. Le courant peut être polyphasé à nₚₕₐₛₑₛ phases, n différent de trois.

## Revendications

1. Bobine (340) pour machine électrique tournante, comportant un faisceau (341) de fils (342) isolés, sensiblement plat, enroulé autour d'un axe d'enroulement (W) pour former une pluralité de spires superposées, la section transversale du faisceau, au niveau des spires superposées, ayant une grande dimension orientée sensiblement perpendiculairement à l'axe d'enroulement (W) de la bobine, **caractérisée par le fait que** la section intérieure de la bobine est plus large d'un côté que de l'autre, la section intérieure ayant des faces opposées non parallèles.

2. Bobine selon la revendication précédente, **caractérisée par le fait que** les fils (342) sont de section circulaire.

3. Bobine selon l'une des revendications précédentes, **caractérisée par le fait que** les fils sont émaillés.

4. Bobine selon l'une quelconque des revendications précédentes, **caractérisée par le fait que** le diamètre des fils est compris entre 0,3 et 2,5 mm.

5. Bobine selon l'une quelconque des revendications précédentes, **caractérisée par le fait que** sa section intérieure est sensiblement rectangulaire.

6. Bobine selon l'une quelconque des revendications précédentes, **caractérisée par le fait que** les fils (342) du faisceau (341) sont dénudés à leurs extrémités (344a, 344b) et recourbés pour former des crochets.

7. Bobine selon la revendication précédente, **caractérisée par le fait que** les crochets (344a, 344b) sont dirigés vers un plan médian de la bobine, perpendiculaire à l'axe d'enroulement (W).

8. Bobine selon l'une quelconque des revendications précédentes, **caractérisée par le fait qu'**elle est reliée à un câble électrique gainé (150), partiellement dénudé au niveau de la connexion (151) avec la bobine.

9. Chapelet de bobines, comportant au moins deux bobines telles que définies dans l'une quelconque des revendications précédentes, reliées électriquement chacune par une extrémité (344a, 344b) à un câble conducteur électrique gainé (150), localement dénudé au niveau de la connexion (151) avec chaque bobine.

10. Stator de machine électrique tournante, comportant plusieurs bobines (340) telles que définies dans l'une quelconque des revendications 1 à 8, engagées chacune sur une dent (130) d'un circuit magnétique du stator.

11. Stator selon la revendication précédente, **caractérisé par le fait que** les bobines (340) présentent une section intérieure dont la dimension du grand côté est supérieure à la dimension des dents, mesurée le long de l'axe du stator, afin de ménager un espace suffisant pour permettre le passage d'un détecteur (190) permettant de délivrer un signal représentatif de la rotation du rotor.

12. Stator selon la revendication 10 ou 11, **caractérisé par le fait que** les bobines (340) présentent chacune une section intérieure ayant des faces opposées non parallèles faisant un angle et **par le fait que** le stator comporte des dents (130) ayant des faces opposées non parallèles faisant le même angle.

13. Procédé pour réparer un stator de machine électrique tournante, comportant des bobines telles que définies selon l'une quelconque des revendications 1 à 8, **caractérisé par le fait qu'**il comporte les étapes suivantes :
- retirer la bobine défectueuse,
- la remplacer par une bobine préimprégnée,
- immobiliser cette bobine sur la dent correspondante par effet de coin, grâce à une largeur non constante de la dent.

## Claims

1. A coil (340) for an electric rotary machine, the coil comprising a substantially flat bundle (341) of insulated wires (342) wound around a winding axis (W) so as to form a plurality of superposed turns, the bundle having a cross-section in the superposed turns which has a long dimension that extends substantially perpendicularly to the winding axis (W) of the coil, **characterized by** the fact that the coil has an inside section which is wider on one side than on the other, the inside section having non-parallel opposite faces.

2. A coil according to the preceding claim, **characterized by** the fact that the wires (342) are of circular section.

3. A coil according to any preceding claims, **characterized by** the fact that the wires are enameled.

4. A coil according to any preceding claims, **characterized by** the fact that the wires have a diameter which lies in the range 0.3 mm to 2.5 mm.

5. A coil according to any preceding claims, **characterized by** the fact that its inside section is substantially rectangular.

6. A coil according to any preceding claims, **characterized by** the fact that the wires (342) of the bundle (341) are stripped at their ends (344a, 344b) and curved to form hooks.

7. A coil according to the preceding claim, **characterized by** the fact that the hooks (344a, 344b) are directed towards a midplane of the coil, perpendicular to said winding axis (W).

8. A coil according to any preceding claims, **characterized by** the fact that it is connected to a sheathed electric cable (150) that is partially stripped at the connection (151) with the coil.

9. A set of coils, including at least two coils as defined in any preceding claims, **characterized by** the fact that each coil is electrically connected via one end (344a, 344b) to a sheathed electric cable (150), locally stripped at the connection (151) with each coil.

10. A rotary electric machine stator comprising a plurality of coils (340) as defined in any one of claims 1-8, each engaged on a respective tooth (130) of a magnetic circuit of the stator.

11. A stator according to the preceding claim, **characterized by** the fact that the coils (340) have an inside section of long side longer than the dimension of the teeth as measured along the axis of the stator, so as to leave a gap which is sufficient to receive a detector (190) suitable for delivering a signal representative of rotation of the rotor.

12. A stator according to claim 10 or claim 11, **characterized by** the fact that the coils (340) each present an inside section having opposite non-parallel faces making an angle, and wherein the stator includes teeth (130) having opposite non-parallel faces making the same angle.

13. A method of repairing a stator for a rotary electric machine, comprising coils as defined in any one of claims 1 to 8, characterized the fact that it comprises the following steps:
removing the faulty coil;
replacing it with a preimpregnated coil;
holding said preimpregnated coil stationary on a corresponding tooth by a wedging effect, thanks to a non constant width of the teeth.

## Patentansprüche

1. Spule (340) für eine drehende elektrische Maschine, mit einem Bündel (341) von isolierten Drähten (342), die im Wesentlichen flach sind und um eine Wicklungsachse (W) gewickelt sind, um mehrere überlagerte Windungen zu bilden, wobei der Querschnitt des Bündels auf Höhe der überlagerten Windungen eine große Abmessung aufweist, die im Wesentlichen senkrecht zur Wicklungsachse (W) der Spule orientiert ist, **dadurch gekennzeichnet, dass** der Innenquerschnitt der Spule auf einer Seite größer ist als auf der anderen, wobei der Innenquerschnitt zwei nicht parallele gegenüberliegende Seiten aufweist.

2. Spule nach dem vorstehenden Anspruch, **dadurch gekennzeichnet, dass** die Drähte (342) kreisrunde Querschnitte aufweisen.

3. Spule nach einem der vorstehenden Ansprüche, **dadurch gekennzeichnet, dass** die Drähte mit Lack überzogen sind.

4. Spule nach einem der vorstehenden Ansprüche, **dadurch gekennzeichnet, dass** der Durchmesser der Drähte zwischen 0,3 und 2,5 mm beträgt.

5. Spule nach einem der vorstehenden Ansprüche, **dadurch gekennzeichnet, dass** der Innenquerschnitt im Wesentlichen rechtwinklig ist.

6. Spule nach einem der vorstehenden Ansprüche, **dadurch gekennzeichnet, dass** die Drähte (342) des Bündels (341) an ihren Enden (344a, 344b) abisoliert und umgebogen sind, um Haken zu bilden.

7. Spule nach dem vorstehenden Anspruch, **dadurch gekennzeichnet, dass** die Haken (344a, 344b) zu einer Mittelebene der Spule gerichtet sind, die senkrecht zu der Wicklungsachse (W) steht.

8. Spule nach einem der vorstehenden Ansprüche, **dadurch gekennzeichnet, dass** die Spule an einem umhüllten elektrischen Kabel (150) befestigt ist, das teilweise auf Höhe der Verbindung (151) mit der Spule abisoliert ist.

9. Spulenkranz mit wenigstens zwei Spulen gemäß einem der vorstehenden Ansprüche, die jeweils mit einem Ende (344a, 344b) an einem umhüllen elektrischen Leitungskabel (150) elektrisch befestigt sind, das lokal auf Höhe der Verbindung (151) mit der jeweiligen Spule abisoliert ist.

10. Stator einer drehenden elektrischen Maschine, mit mehreren Spulen (340) gemäß einem der Ansprüche 1 bis 8, die jeweils auf einem Zahn (130) einer Magnetschaltung der Spule angebracht sind.

11. Stator nach dem vorstehenden Anspruch, **dadurch gekennzeichnet, dass** die Spulen (340) Innenquerschnitte aufweisen, deren Längsseitenabmessung größer ist als die Abmessung der Zähne, gemessen entlang der Längsachse des Stators, so dass ein ausreichender Raum bereitgestellt wird, um das Hindurchreichen eines Detektors (190) zu erlauben, der ein für die Rotation des Rotors repräsentatives Signal liefert.

12. Stator nach Anspruch 10 oder 11, **dadurch gekennzeichnet, dass** die Spulen (340) jeweils einen internen Querschnitt aufweisen, dessen gegenüberliegende Seiten nicht parallel sind und die einen Winkel einschließen, und dadurch, dass der Stator Zähne (130) aufweist, die gegenüberliegende Seiten haben, die nicht parallel sind und den gleichen Winkel einschließen.

13. Verfahren zum Reparieren eines Stators einer elektrischen drehenden Maschine mit Spulen gemäß einem der Ansprüche 1 bis 8, **dadurch gekennzeichnet, dass**
die defekte Spule entfernt wird,
diese durch eine vorimprägnierte Spule ersetzt wird,
diese Spule auf dem entsprechenden Zahn durch einen Keileffekt befestigt wird, der auf einer nicht konstanten Breite des Zahns beruht.
